# FASCICULE DE BREVET EUROPEEN

(11) **EP 4 440 932 B1**
(45) Date de publication et mention de la délivrance du brevet: **17.09.2025**
(21) Numéro de dépôt: 22818772.0
(22) Date de dépôt: 21.11.2022
(51) Int. Cl.: B64D 11/02, B64D 11/04

(54) **SYSTÈME ET PROCÉDÉ DE CHAUFFAGE POUR UN CIRCUIT D'EAU D'AÉRONEF**
HEIZSYSTEM UND VERFAHREN FÜR EINEN FLUGZEUG-WASSERKREISLAUF
HEATING SYSTEM AND METHOD FOR AN AIRCRAFT WATER CIRUIT

(30) Priorité: 02.12.2021 FR 2112826
(43) Date de publication de la demande: 09.10.2024
(73) Titulaire: Airbus Atlantic, 17300 Rochefort (FR)
(72) Inventeur: PERHERIN, Daniel, 44600 SAINT NAZAIRE (FR)
(74) Mandataire: Argyma
(86) Numéro de dépôt international: PCT/EP2022/082564
(87) Numéro de publication internationale: WO 2023/099255

(56) Documents cités:
- EP-A1- 3 070 995
- JP-A- 2010 065 508

## Description

### DOMAINE TECHNIQUE

La présente invention concerne le domaine du chauffage d'un circuit d'eau dans un aéronef, en particulier, un circuit d'eau potable ou d'eau usée.

De manière connue, un aéronef comporte plusieurs circuits d'eau afin d'acheminer de l'eau potable à des points d'eau ou collecter de l'eau usée à des points d'évacuation. Par la suite, un circuit d'eau définit intérieurement un milieu intérieur dans lequel peut circuler de l'eau et extérieurement un milieu extérieur. En pratique, la circulation d'eau dans le milieu intérieur est impactée par la température du milieu intérieur. En particulier, un flux d'eau est susceptible de geler dans le circuit d'eau si la température du milieu intérieure est inférieure à 0°C, ce qui peut obstruer le circuit d'eau et engendrer des dommages en cas de mise sous pression.

Pour éliminer cet inconvénient, il est connu de positionner le long du circuit d'eau un organe de chauffage, par exemple une résistance électrique, afin de chauffer le circuit d'eau et faire fondre un éventuel amas de glace susceptible d'obstruer le circuit d'eau. De manière connue, l'organe de chauffage est activé lorsque la température du milieu intérieur est inférieure à une température seuil de 5°C. En pratique, au cours du vol d'un aéronef, l'organe de chauffage est activé de manière fréquente alors que le risque de givrage est inexistant. De même, avant la mise en service d'un aéronef, l'organe de chauffage est systématiquement activé pour éliminer tout amas de glace qui se serait formé lors du stockage de l'aéronef.

Les multiples activations de l'organe de chauffage induisent un coût énergétique important. Afin de rendre un aéronef plus respectueux de l'environnement, il existe un intérêt à réduire ce coût énergétique. Une solution évidente pour atteindre cet objectif serait d'utiliser un organe de chauffage plus efficient mais cela impacterait le coût, l'encombrement et la masse.

Afin d'éliminer au moins certains de ces inconvénients, il est proposé un nouveau système et un nouveau procédé de chauffage d'un circuit d'eau d'un aéronef. On connait dans l'art antérieur par la demande JP2010065508A un système d'alimentation en eau dans une habitation pour éviter la formation de glace dans les canalisations et par la demande EP3070995A1 un système de chauffage d'un pare-brise d'un aéronef.

### PRESENTATION DE L'INVENTION

L'invention concerne un système de chauffage pour un circuit d'eau d'un aéronef, le circuit d'eau définissant intérieurement un milieu intérieur dans lequel peut circuler de l'eau et extérieurement un milieu extérieur, le système de chauffage comprenant :
- Au moins un organe de chauffage configuré pour être positionné le long du circuit d'eau et configuré pour réchauffer son milieu intérieur,
- Au moins un capteur de température intérieure configuré pour mesurer une température intérieure dans le milieu intérieur, et
- Au moins un calculateur configuré pour activer l'organe de chauffage si la température intérieure est inférieure à un seuil de température prédéterminé.

L'invention est remarquable en ce que le système de chauffage comporte au moins un capteur d'hygrométrie configuré pour mesurer un paramètre hygrométrique dans le milieu intérieur et ce que le calculateur est configuré en outre pour :
- calculer une température de rosée à partir du paramètre hygrométrique et de la température intérieure ; et
- inhiber l'organe de chauffage si la température intérieure est supérieure à la température de rosée.

Grâce au système de chauffage, on détermine de manière dynamique les conditions de givrage d'un circuit d'eau par analyse des conditions du milieu intérieur. Ainsi, on peut activer l'organe de chauffage uniquement lorsque cela est pertinent. Autrement dit, on évite une activation inutile de l'organe de chauffage, ce qui procure des économies sur le plan énergétique. Un chauffage peut ainsi être évité lorsque le paramètre hygrométrique est faible.

De préférence, le système de chauffage comprenant un capteur de pression intérieure configuré pour mesurer une pression intérieure dans le milieu intérieur, le calculateur est configuré pour déterminer la température de rosée à partir d'une base de données qui met en relation le paramètre hygrométrique, la température intérieure et la pression intérieure. De manière avantageuse, la connaissance de la pression intérieure permet de déterminer de manière précise la température de rosée.

De manière préférée, le calculateur est configuré pour inactiver l'organe de chauffage si le paramètre hygrométrique est inférieur à un seuil hygrométrique prédéterminé. Ainsi, si l'humidité est trop faible, aucun chauffage n'est réalisé et, ce, indépendamment de la température intérieure. Cela est particulièrement pertinent pour un circuit d'eau qui ne doit pas être dégivré préalablement au démarrage de l'aéronef, en particulier, un circuit d'eau usée.

De préférence, le système de chauffage comprend au moins un capteur de pression intérieure configuré pour mesurer une pression intérieure dans le milieu intérieur, le calculateur est configuré pour comparer la pression intérieure à une pression intérieure de consigne et émettre une alarme si la pression intérieure est inférieure à la pression intérieure de consigne. Le système de chauffage permet ainsi de détecter toute fuite de manière avantageuse.

De préférence, le circuit d'eau comprenant au moins deux conduites reliées par un raccord, le capteur de température intérieure est configuré pour être monté sur ledit raccord. De préférence encore, le capteur de pression intérieure est configuré pour être monté sur ledit raccord. De préférence, le capteur d'hygrométrie est monté dans ledit raccord. On forme ainsi un raccord qui peut interagir avec le calculateur de manière pratique. Cela est particulièrement avantageux pour un circuit d'eau d'aéronef pour lequel les conduites sont fixes. On peut ainsi appliquer l'invention à un aéronef existant.

L'invention concerne également un ensemble comprenant un circuit d'eau d'un aéronef et un système de chauffage tel que présenté précédemment.

L'invention concerne aussi un procédé de chauffage d'un circuit d'eau d'aéronef au moyen d'un système de chauffage tel que présenté précédemment, le circuit d'eau définissant intérieurement un milieu intérieur dans lequel peut circuler de l'eau et extérieurement un milieu extérieur, le procédé de chauffage comprenant des étapes consistant à :
- activer l'organe de chauffage si la température intérieure est inférieure à un seuil de température prédéterminé,
- calculer une température de rosée à partir du paramètre hygrométrique et de la température intérieure ; et
- inhiber l'organe de chauffage si la température intérieure est supérieure à la température de rosée.

L'invention concerne aussi un programme d'ordinateur comprenant des instructions pour l'exécution des étapes du procédé de chauffage présenté précédemment lorsque ledit programme est exécuté par un calculateur. L'invention concerne aussi un support d'enregistrement dudit programme d'ordinateur.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un aéronef comportant deux circuits d'eau.
La [Fig.2] est une représentation schématique d'un circuit d'eau avec un système de chauffage selon une première forme de réalisation de l'invention.
La [Fig.3] est une représentation schématique d'un circuit d'eau avec un système de chauffage selon une deuxième forme de réalisation de l'invention.
La [Fig.4] est une représentation schématique des étapes de mise en œuvre d'un procédé de chauffage selon l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

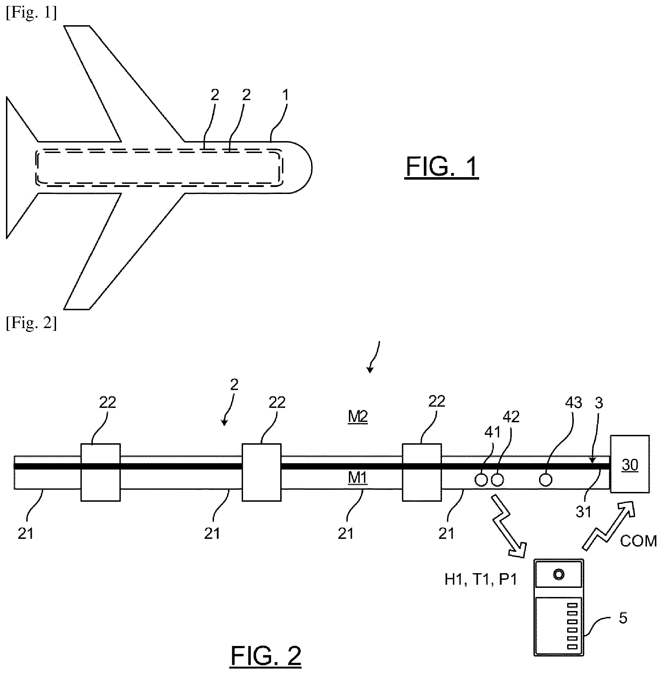

En référence à la [Fig.1], il est représenté schématiquement un aéronef 1 comportant plusieurs circuits d'eau 2, en particulier, un circuit pour l'eau potable et un circuit pour l'eau usée. Il va de soi que le nombre de circuits d'eau 2 pourrait être différent.

Comme illustré à la [Fig.2], il est représenté un circuit d'eau 2 comprenant plusieurs conduites 21 qui sont reliées par des raccords 22. De préférence, les conduites 21 sont fixes et solidarisées au corps de l'aéronef 1. De préférence, les raccords 22 sont montés de manière mobile sur les conduites 21 afin de les relier ensemble.

Par la suite, le circuit d'eau 2 définit intérieurement un milieu intérieur M1 dans lequel peut circuler de l'eau et extérieurement un milieu extérieur M2. Autrement dit, le milieu extérieur M2 correspond au milieu ambiant et peut voir ses conditions de pression et de température varier de manière importante en fonction des conditions d'utilisation de l'aéronef 1.

En référence à la [Fig.2], l'aéronef 1 comporte en outre un système de chauffage S du circuit d'eau 2 qui comporte un organe de chauffage 3 positionné le long du circuit d'eau 2 et configuré pour réchauffer son milieu intérieur M1. Comme illustré à la [Fig.2], l'organe de chauffage 3 comporte un élément chauffant 31 qui s'étend le long du circuit d'eau 2, c'est-à-dire, le long des conduites 21 et des raccords 22, et un dispositif de commande 30 configuré pour recevoir des instructions de commande COM, de manière filaire ou sans fil, pour activer/inactiver l'élément chauffant 31. De préférence, le dispositif de commande 30 comporte une carte électronique de communication. Dans cet exemple, l'élément chauffant 31 se présente sous la forme d'un conducteur électrique afin de générer de la chaleur par effet Joule. Il va de soi que d'autres technologies de chauffage pourraient convenir (conduction, rayonnement, convection, etc.). Il est présenté un élément chauffant 31 qui est indépendant du circuit d'eau 2 mais il va de soi que l'élément chauffant 31 pourrait être intégré au circuit d'eau 2. A titre d'exemple, le circuit d'eau 2 pourrait être recouvert, partiellement ou entièrement, par une peinture conductrice afin de permettre un chauffage. Dans cet exemple, l'organe de chauffage 3 peut être commandé de manière filaire ou sans fil.

Selon l'invention, en référence à la [Fig.2], le système de chauffage S comprend un capteur d'hygrométrie 41 configuré pour mesurer un paramètre hygrométrique H1 dans le milieu intérieur M1 ainsi qu'un capteur de température intérieure 42 configuré pour mesurer une température intérieure T1 dans le milieu intérieur M1.

Un capteur d'hygrométrie 41, connu de l'homme du métier, permet de mesurer l'humidité dans le milieu intérieur M1, c'est-à-dire, dans le circuit d'eau 2. Cela permet de détecter la présence ou non d'eau. Le paramètre hygrométrique H1 est avantageux car il permet notamment d'éviter un chauffage en tenant compte du niveau d'humidité et de la température dans le circuit d'eau 2 comme cela sera présenté par la suite.

Le paramètre hygrométrique H1 ainsi que la température intérieure T1 permettent de déterminer de manière précise le milieu intérieur M1. De manière optionnelle, afin de disposer d'une connaissance poussée du milieu intérieur M1, le système de chauffage S comprend un capteur de pression intérieure 43, connu de l'homme du métier, configuré pour mesurer une pression intérieure P1 dans le milieu intérieur M1. Comme les conditions dans le milieu intérieur M1 sont connues, on peut avantageusement détecter tout risque de conditions givrantes comme cela présenté par la suite.

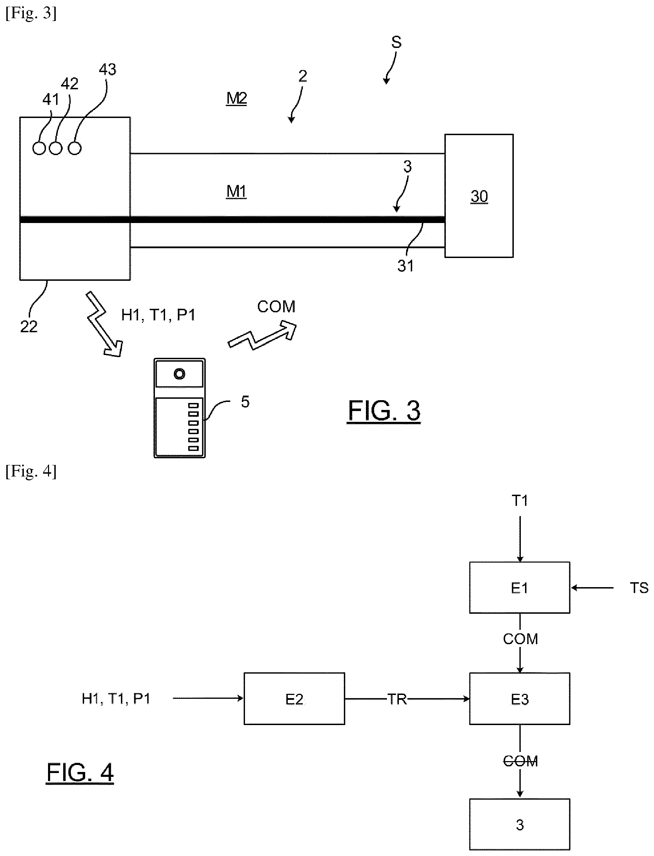

Selon l'invention, en référence à la [Fig.2], le système de chauffage S comprend également un calculateur 5 configuré pour calculer (Etape E2 [Fig.4]), à partir du paramètre hygrométrique H1, de la température intérieure T1 et de la pression intérieure P1, une température de rosée TR. En effet, de la rosée peut se former sur la paroi intérieure du circuit d'eau en fonction des conditions dans le milieu intérieur M1. Dans cet exemple, la température de rosée TR est déterminée à partir d'une base de données se présentant de manière préférée sous la forme d'abaques qui sont fonction du paramètre hygrométrique H1, de la température intérieure T1 et de la pression intérieure P1. Ainsi, la température de rosée TR peut être calculée de manière dynamique.

De manière optionnelle, la température de rosée TR peut être déterminée à partir d'une base de données déterminées pour des conditions moyennes de pression intérieure P1. Ainsi, la température de rosée TR peut être déterminée uniquement à partir du paramètre hygrométrique H1 et de la température intérieure T1.

De manière connue, le calculateur 5 est configuré pour activer (Etape E1 [Fig.4]) l'organe de chauffage 3 si la température intérieure T1 est inférieure à une température seuil prédéterminée TS, de préférence, comprise entre 2°C et 8°C. Dans cet exemple, la température seuil TS est de 5°C. En pratique, le calculateur 5 permet d'émettre une commande d'activation COM de l'organe de chauffage 3.

Selon l'invention, le calculateur 5 est configuré pour inactiver (Etape E3 [Fig.4]) l'organe de chauffage 3 si la température intérieure T1 est supérieure à la température de rosée TR. Cela permet de limiter la consommation énergétique liée au chauffage en évitant un chauffage inutile lorsque les conditions de givrage ne sont pas réunies. Ainsi, si la température de rosée TR est de -5°C, le circuit d'eau 2 n'est pas chauffé même si la température intérieure T1 est de -2°C.

Dans cet exemple, le calculateur 5 se présente sous la forme d'un ordinateur mais il va de soi qu'il pourrait se présenter sous diverses formes, en particulier, sous la forme d'une pluralité d'équipements proches ou distants.

De manière préférée, le calculateur 5 est configuré pour inactiver l'organe de chauffage 3 si le paramètre hygrométrique H1 est inférieur à un seuil hygrométrique prédéterminé. Autrement dit, si l'humidité est trop faible, il n'est pas réalisé de chauffage du circuit d'eau 2 même si la température intérieure T1 est très faible. Cela procure un gain énergétique important.

De préférence, le calculateur 5 est configuré pour comparer la pression intérieure P1 à une pression intérieure de consigne (définie par une pompe d'entrainement de l'eau) et émettre une alarme si la pression intérieure P1 est inférieure à la pression intérieure de consigne afin d'alerter en cas de fuite. Ainsi, le système de chauffage S permet en outre de réaliser une surveillance du fonctionnement du circuit d'eau 2.

En référence à la [Fig.2], il a été présenté des capteurs 41-43 montés de manière rapportée sur le circuit d'eau 2, en particulier, sur une conduite 21 dudit circuit d'eau 2 en relation avec le milieu intérieur M1. Selon un aspect de l'invention, en référence à la [Fig.3], le capteur d'hygrométrie 41, le capteur de température intérieure 42 sont montés dans le raccord 22. Le raccord remplit ainsi une fonction de station de mesure, ce qui est avantageux. Le capteur de pression intérieure 43 peut également être monté dans le raccord 22. De manière préférée, les capteurs 41-43 sont intégrés audit raccord 22 de manière à permettre la mise en place d'un système de chauffage S de manière pratique dans un aéronef existant 1. En effet, il suffit de changer un raccord 22 pour accéder aux avantages de l'invention. De manière préférée, le raccord 22 forme une station de mesure indépendante qui peut communiquer avec le calculateur 5. De préférence, chaque raccord 22 est autonome et comporte une source d'énergie (batterie, générateur, connecteur électrique à un réseau électrique, etc.) et un organe de communication avec le calculateur 5 (carte de communication filaire ou sans fil). De manière préférée, plusieurs raccords 22 peuvent être positionnés dans le circuit d'eau 2 afin de disposer de mesures locales et ainsi réaliser des chauffages adaptés pour différentes portions locales du circuit d'eau 2.

Le capteur de température intérieure 42 peut être monté dans le milieu extérieur M2 en contact avec la paroi d'une conduite 21 ou du raccord 22 de manière à mesurer de manière indirecte la température intérieure T1.

L'invention concerne également un procédé de chauffage d'un circuit d'eau d'aéronef 2 au moyen d'un système de chauffage S tel que présenté précédemment, le procédé de chauffage comprenant des étapes consistant à :
- Activer E1 l'organe de chauffage 3 si la température intérieure T1 est inférieure à un seuil de température TS prédéterminé,
- Calculer E2 une température de rosée TR à partir du paramètre hygrométrique H1 et de la température intérieure T1 ; et
- Inhiber E3 l'organe de chauffage 3 si la température intérieure T1 est supérieure à la température de rosée TR.

Comme illustré à la [Fig.4], si la température intérieure T1 est inférieure à un seuil de température TS prédéterminé, le calculateur 5 émet une commande d'activation COM qui est inhibée si la température intérieure T1 est supérieure à la température de rosée TR.

L'invention a été présentée de manière générale pour un système de chauffage S chauffant un circuit d'eau 2 mais il va de soi que le système de chauffage S peut être mis en œuvre de manière indépendante sur différentes portions d'un circuit d'eau afin de réaliser un chauffage sur mesure en fonction des mesures locales réalisées par les capteurs.

De manière avantageuse, chaque circuit d'eau 2 (ou portion de circuit d'eau 2) est chauffée par comparaison de la température intérieure T1 avec la température de rosée TR du circuit d'eau 2 (ou de la portion de circuit d'eau 2). Ainsi, un circuit d'eau potable et un circuit d'eau usée peuvent être chauffés de manière différente, en particulier, par le fait que le débit est plus faible dans un circuit d'eau usée et l'humidité plus faible.

Dans l'art antérieur, un circuit d'eau 2 était systématiquement chauffé préalablement au démarrage d'un aéronef. Grâce à l'invention, un circuit d'eau 2 n'est chauffé qu'en cas de besoin, ce qui procure une économie importante.

## Revendications

1. Système de chauffage (S) pour un circuit d'eau (2) d'un aéronef (1), le circuit d'eau (2) définissant intérieurement un milieu intérieur (M1) dans lequel peut circuler de l'eau et extérieurement un milieu extérieur (M2), le système de chauffage (S) comprenant :
• Au moins un organe de chauffage (3) configuré pour être positionné le long du circuit d'eau (2) et configuré pour réchauffer son milieu intérieur (M1),
• Au moins un capteur de température intérieure (42) configuré pour mesurer une température intérieure (T1) dans le milieu intérieur (M1),
• Au moins un calculateur (5) configuré pour activer l'organe de chauffage (E1) si la température intérieure (T1) est inférieure à un seuil de température (TS) prédéterminé,
• système **caractérisé par le fait qu'**il comporte au moins un capteur d'hygrométrie (41) configuré pour mesurer un paramètre hygrométrique (H1) dans le milieu intérieur (M1),
• le calculateur (5) étant configuré en outre pour :
• calculer (E2) une température de rosée (TR) à partir du paramètre hygrométrique (H1) et de la température intérieure (T1) ; et
• inhiber l'organe de chauffage (E3) si la température intérieure (T1) est supérieure à la température de rosée (TR).

2. Système de chauffage (S) selon la revendication 1, dans lequel, le système de chauffage (S) comprenant un capteur de pression intérieure (43) configuré pour mesurer une pression intérieure (P1) dans le milieu intérieur (M1), le calculateur (5) est configuré pour déterminer la température de rosée (TR) à partir d'une base de données qui met en relation le paramètre hygrométrique (H1), la température intérieure (T1) et la pression intérieure (P1).

3. Système de chauffage (S) selon l'une des revendications 1 à 2, dans lequel le calculateur (5) est configuré pour inactiver l'organe de chauffage (3) si le paramètre hygrométrique (H1) est inférieur à un seuil hygrométrique prédéterminé.

4. Système de chauffage (S) selon l'une des revendications 1 à 3, comprenant au moins un capteur de pression intérieure (43) configuré pour mesurer une pression intérieure (P1) dans le milieu intérieur (M1), le calculateur (5) est configuré pour :
• Comparer la pression intérieure (P1) à une pression intérieure de consigne et
• Emettre une alarme si la pression intérieure (P1) est inférieure à la pression intérieure de consigne.

5. Système de chauffage (S) selon l'une des revendications 1 à 4, dans lequel, le circuit d'eau (2) comprenant au moins deux conduites (21) reliées par un raccord (22), le capteur de température intérieure (42) est configuré pour être monté sur ledit raccord (22).

6. Système de chauffage (S) selon la revendication 5 pris en combinaison avec la revendication 2 ou 4, dans lequel le capteur de pression intérieure (43) est configuré pour être monté sur ledit raccord (22).

7. Ensemble comprenant un circuit d'eau (2) d'un aéronef (1) et un système de chauffage (S) selon l'une des revendications 1 à 6.

8. Procédé de chauffage (S) d'un circuit d'eau d'aéronef (2) au moyen du système de chauffage (S) selon l'une des revendications 1 à 7, le circuit d'eau (2) définissant intérieurement un milieu intérieur (M1) dans lequel peut circuler de l'eau et extérieurement un milieu extérieur (M2), le procédé de chauffage comprenant l'étape:
• activer l'organe de chauffage (E1) si la température intérieure (T1) est inférieure à un seuil de température (TS) prédéterminé,
le procédé de chauffage étant **caractérisé en ce qu'**il comprend en outre les étapes consistant à:
• calculer (E2) une température de rosée (TR) à partir du paramètre hygrométrique (H1) et de la température intérieure (T1) ; et
• inhiber l'organe de chauffage (E3) si la température intérieure (T1) est supérieure à la température de rosée (TR).

## Patentansprüche

1. Heizsystem (S) für einen Wasserkreislauf (2) eines Flugzeugs (1), wobei der Wasserkreislauf (2) innen einen Innenbereich (M1), in dem Wasser zirkulieren kann, und außen einen Außenbereich (M2) definiert, wobei das Heizsystem (S) umfasst:
• mindestens ein Heizelement (3), das ausgelegt ist, um entlang des Wasserkreislaufs (2) positioniert zu sein und ausgelegt ist, um dessen Innenbereich (M1) zu erwärmen,
• mindestens einen Innentemperatursensor (42), der ausgelegt ist, um eine Innentemperatur (T1) im Innenbereich (M1) zu messen,
• mindestens einen Rechner (5), der ausgelegt ist, um das Heizelement (E1) zu aktivieren, wenn die Innentemperatur (T1) unter einen vorgegebenen Temperaturschwellenwert (TS) fällt,
• wobei das System **dadurch gekennzeichnet ist, dass** es mindestens einen Feuchtigkeitssensor (41) aufweist, der ausgelegt ist, um einen Feuchtigkeitsparameter (H1) im Innenbereich (M1) zu messen,
• wobei der Rechner (5) ferner ausgelegt ist, um:
• eine Taupunkttemperatur (TR) aus dem Feuchtigkeitsparameter (H1) und der Innentemperatur (T1) zu berechnen (E2); und
• das Heizelement (E3) zu sperren, wenn die Innentemperatur (T1) über der Taupunkttemperatur (TR) liegt.

2. Heizsystem (S) nach Anspruch 1, wobei, wenn das Heizsystem (S) einen Innendrucksensor (43) umfasst, der ausgelegt ist, um einen Innendruck (P1) im Innenbereich (M1) zu messen, der Rechner (5) ausgelegt ist, um die Taupunkttemperatur (TR) aus einer Datenbank zu ermitteln, die den Feuchtigkeitsparameter (H1), die Innentemperatur (T1) und den Innendruck (P1) miteinander in Beziehung setzt.

3. Heizsystem (S) nach einem der Ansprüche 1 bis 2, wobei der Rechner (5) ausgelegt ist, um das Heizelement (3) zu deaktivieren, wenn der Feuchtigkeitsparameter (H1) unter einen vorgegebenen Feuchtigkeitsschwellenwert fällt.

4. Heizsystem (S) nach einem der Ansprüche 1 bis 3, das mindestens einen Innendrucksensor (43) umfasst, der zum Messen eines Innendrucks (P1) im Innenbereich (M1) ausgelegt ist, wobei der Rechner (5) ausgelegt ist, um:
• den Innendruck (P1) mit einem Soll-Innendruck zu vergleichen und
• einen Alarm auszugeben, wenn der Innendruck (P1) unter den Soll-Innendruck fällt.

5. Heizsystem (S) nach einem der Ansprüche 1 bis 4, wobei, wenn der Wasserkreislauf (2) mindestens zwei durch eine Verbindung (22) verbundene Leitungen (21) umfasst, der Innentemperatursensor (42) ausgelegt ist, um an der Verbindung (22) angebracht zu sein.

6. Heizsystem (S) nach Anspruch 5 in Kombination mit Anspruch 2 oder 4, wobei der Innendrucksensor (43) ausgelegt ist, um an der Verbindung (22) angebracht zu sein.

7. Anordnung, umfassend einen Wasserkreislauf (2) eines Flugzeugs (1) und ein Heizsystem (S) nach einem der Ansprüche 1 bis 6.

8. Verfahren zum Heizen (S) eines Flugzeug-Wasserkreislaufs (2) mittels des Heizsystems (S) nach einem der Ansprüche 1 bis 7, wobei der Wasserkreislauf (2) innen einen Innenbereich (M1), in dem Wasser zirkulieren kann, und außen einen Außenbereich (M2) definiert, wobei das Heizverfahren den Schritt umfasst:
• Aktivieren des Heizelements (E1), wenn die Innentemperatur (T1) unter einen vorgegebenen Temperaturschwellenwert (TS) fällt,
wobei das Heizverfahren **dadurch gekennzeichnet ist, dass** es ferner die Schritte umfasst, die darin bestehen:
• Berechnen (E2) einer Taupunkttemperatur (TR) aus dem Feuchtigkeitsparameter (H1) und der Innentemperatur (T1); und
• Sperren des Heizelements (E3), wenn die Innentemperatur (T1) über der Taupunkttemperatur (TR) liegt.

## Claims

1. A heating system (S) for a water circuit (2) of an aircraft (1), the water circuit (2) defining on the inside, an inside environment (M1) in which water can circulate and, on the outside, an outside environment (M2), the heating system (S) comprising:
- at least one heating member (3) configured to be positioned along the water circuit (2) and configured to heat its inside environment (M1),
- at least one inside temperature sensor (42) configured to measure an inside temperature (T1) in the inside environment (M1),
- at least one calculator (5) configured to activate the heating member (E1) if the inside temperature (T1) is below a predetermined temperature threshold (TS),
- system **characterized by** the fact that it comprises at least one humidity sensor (41) configured to measure a humidity parameter (H1) in the inside environment (M1),
- the calculator (5) being further configured to:
o calculate (E2) a dew point temperature (TR) from the humidity parameter (H1) and the inside temperature (T1); and
o inhibit the heating member (E3) if the inside temperature (T1) is higher than the dew point temperature (TR).

2. The heating system (S) according to claim 1, wherein, the heating system (S) comprising an inside pressure sensor (43) configured to measure an inside pressure (P1) in the inside environment (M1), the calculator (5) is configured to determine the dew point temperature (TR) from a database which relates the humidity parameter (H1), the inside temperature (T1) and the inside pressure (P1).

3. The heating system (S) according to one of claims 1 to 2, wherein the calculator (5) is configured to deactivate the heating member (3) if the humidity parameter (H1) is less than a predetermined humidity threshold.

4. The heating system (S) according to one of claims 1 to 3, comprising at least one inside pressure sensor (43) configured to measure an inside pressure (P1) in the inside environment (M1), the calculator (5) is configured to:
- compare the inside pressure (P1) with a set inside pressure and
- send an alarm if the inside pressure (P1) is lower than the set inside pressure.

5. The heating system (S) according to one of claims 1 to 4, wherein, the water circuit (2) comprising at least two ducts (21) connected by a fitting (22), the inside temperature sensor (42) is configured to be mounted on said fitting (22).

6. The heating system (S) according to claim 5 taken in combination with claim 2 or 4, wherein the inside pressure sensor (43) is configured to be mounted on said fitting (22).

7. An assembly comprising a water circuit (2) of an aircraft (1) and a heating system (S) according to one of claims 1 to 6.

8. A method for heating (S) an aircraft water circuit (2) by means of the heating system (S) according to one of claims 1 to 7, the water circuit (2) defining on the inside, an inside environment (M1) in which water can circulate and on the outside, an outside environment (M2), the heating method comprising the step :
- activating the heating member (E1) if the inside temperature (T1) is below a predetermined temperature threshold (TS), the heating process being **characterized in that** it further comprises the steps consisting in :
- calculating (E2) a dew point temperature (TR) from the humidity parameter (H1) and the inside temperature (T1); and
- inhibiting the heating member (E3) if the inside temperature (T1) is higher than the dew point temperature (TR).
